# EUROPÄISCHE PATENTSCHRIFT

(11) **EP 3 428 300 B1**
(45) Veröffentlichungstag und Bekanntmachung des Hinweises auf die Patenterteilung: **05.05.2021**
(21) Anmeldenummer: 18181310.6
(22) Anmeldetag: 03.07.2018
(51) Int. Cl.: B02C 4/30, C22C 33/06, C22C 33/02, B02C 4/00, B32B 15/01, C21D 9/38, C22C 38/02, C22C 38/04, C21D 6/00, C22C 38/22, C22C 38/24, C22C 38/26, C22C 38/34, C22C 38/36, B22F 3/15, C22C 38/38, C22C 38/40, B22F 7/08, B30B 11/22, C22C 38/00, B02C 15/00

(54) **ROLLE FÜR EINE MAHL- ODER/UND PRESSVORRICHTUNG, INSBESONDERE KOLLERROLLE FÜR EINE PRESSE ZUR HERSTELLUNG VON PELLETS, UND VERFAHREN ZUR HERSTELLUNG DER ROLLE**
ROLLER FOR A GRINDING OR/AND PRESSING DEVICE, IN PARTICULAR COMPRESSION ROLLER FOR A PRESS FOR THE PRODUCTION OF PELLETS, AND METHOD OF MANUFACTURING THE ROLLER
ROULEAU POUR UN DISPOSITIF MOULIN ET / OU PRESSE, EN PARTICULIER UN ROULEAU DE PRESSAGE POUR UNE PRESSE DE FABRICATION DE PELLETS ET PROCÉDÉ DE FABRICATION DE ROULEAU

(30) Priorität: 10.07.2017 DE 102017115396
(43) Veröffentlichungstag der Anmeldung: 16.01.2019
(73) Patentinhaber: Saar-Pulvermetall GmbH, 66793 Saarwellingen (DE)
(72) Erfinder: Hamentgen, Michael, 66787 Wadgassen (DE)
(74) Vertreter: Patentanwälte Bernhardt / Wolff Partnerschaft mbB

(56) Entgegenhaltungen:
- EP-A1- 0 348 380
- EP-A1- 2 364 800
- CN-A- 103 008 050
- CN-A- 105 803 319
- THEISEN W: "Wear resistant PM-coatings produced by HIP-cladding", CONFERENCE PROCEEDINGS / EURO PM 2004, POWDER METALLURGY WORLD CONGRESS & EXHIBITION : AUSTRIA CENTRE, VIENNA, AUSTRIA, 17 - 21 OCTOBER, SHREWSBURY : EUROPEAN POWDER METALLURGY ASSOCIATION, GB, Bd. 3, 17. Oktober 2004 (2004-10-17), Seiten 797-802, XP008129506, ISBN: 978-1-899072-15-6
- N.A: "HEXADUR Wear Protection for the Cement Industry Contents", , 30. November 2012 (2012-11-30), XP055500469, Gefunden im Internet: URL:http://www.koeppern-international.com/ uploads/media/Hexadur_03.pdf [gefunden am 2018-08-17]
- S. V. PANIN ET AL: "The role of notch tip shape and radius on deformation mechanisms of 12Cr1MoV steel under impact loading. Part 2. Influence of strain localization on fracture and numeric simulations : Impact Loading. Influence of Strain Localization", FATIGUE AND FRACTURE OF ENGINEERING MATERIALS AND STRUCTURES., vol. 40, no. 11, 16 March 2017 (2017-03-16), pages 1838-1853, XP055681362, GB ISSN: 8756-758X, DOI: 10.1111/ffe.12602

## Beschreibung

Die Erfindung betrifft ein Verfahren zur Herstellung einer Rolle für eine Mahl- oder/und Pressvorrichtung, insbesondere einer Kollerrolle für eine Presse zur Herstellung von Pellets, die aus metallischem Material gebildet wird, wobei die Rolle aus einem Verbundkörper gebildet wird, dessen Außenbereich, der eine Mantelfläche der Rolle umfasst und aus Stahl gebildet wird, und dessen innerhalb des Außenbereichs angeordneter, aus Stahl gebildeter Kernbereich, aus verschiedenen, sich in ihrer Zähigkeit und/oder Härte unterscheidenden Stählen hergestellt und miteinander verbunden werden, wobei der Kernbereich aus einem Stahl hergestellt wird, der eine größere Zähigkeit aufweist als der Stahl des Außenbereichs, oder/und der Außenbereich aus einem Stahl hergestellt wird, der eine größere Härte aufweist als der Stahl des Kernbereichs.
Die Erfindung betrifft ferner eine Rolle für eine Mahl- oder/und Pressvorrichtung.

Ein solches Verfahren ist aus der CN 105803319 A bekannt, die einen abriebfesten Bainit-Martensit-Duplexphasenstahl-Walzenmantel und ein Herstellungsverfahren dafür beschreibt. Ein Gusslegierungsstahl der Silikomangan-Reihe wird mit unterschiedlichen Zusammensetzungen durch Schleuderdruckgießen in einem Schichtmodus hergestellt, wobei eine äußere Schicht eine abriebfeste Schicht mit hoher Härte ist, und eine innere Schicht eine duktile Matrix ist.

Weitere Verfahren der eingangs genannten Art sind aus der EP 2 364 800 A1 und der CN 103 008 050 A bekannt.

THEISEN W: "Wear resistant PM-coatings produced by HIP-cladding", CONFERENCE PROCEEDINGS / EURO PM 2004, POWDER METALLURGY WORLD CONGRESS & EXHIBITION: AUSTRIA CENTRE, VIENNA, AUSTRIA, 17 - 21 OCTOBER; SHREWSBURY: EUROPEAN POWDER METALLURGY ASSOCIATION, GB, Bd. 3, 17. Oktober 2004 (2004-10-17), Seiten 797-802, XP008129506, ISBN: 978-1-899072-15-6 beschreibt ein Verfahren zum Schweißen, bei dem verschiedene kommerziell erhältliche Stahlpulver durch Kapselung auf einen Stahlring aufgebracht und mittels heiß-isostatischem Pressen (HIP) mit dem Ring verbunden werden, sodass sich auf dem Stahlring eine verschleißbeständige Schicht bildet.

Durch Benutzung bekannte Rollen werden zur Reduzierung von Verschleiß und Materialabtrag aus hochwertigen Vergütungs- oder Werkzeugstahl hergestellt, dessen Härte normalerweise zwischen 45 und 55 HRC beträgt. Bei einigen Rollen wird der Stahl einer Oberflächenbehandlung wie Nitrierung, Carbonitrierung oder Oberflächenaufkohlung unterzogen, um die Härte im Bereich der Rollenoberfläche auf Werte größer 58 HRC zu steigern. Diese Behandlung hat allerdings den Nachteil, dass nach Abtrag der gehärteten Oberflächenschicht, die normalerweise eine Dicke kleiner 0,1 mm aufweist, das nicht gehärtete Material des Rolleninneren die Oberfläche bildet, dort aufgrund der geringeren Verschleißfestigkeit der Materialabtrag schneller fortschreitet und die Rolle deshalb nicht weiter benutzt werden kann.

Weist der Stahl, aus dem die Rolle gebildet ist, eine zu große Härte auf, besteht aufgrund der großen, beim Mahlen oder Pressen aufzubringenden Anpressdrücke die Gefahr, dass die Rolle oder die mit der Rolle zusammenwirkende Pressmatrize brechen. Ist die Härte des Stahls zu gering, wird vergleichsweise schnell Material von der Rollenoberfläche abgetragen, was dazu führt, dass in der Mühle bzw. der Presse keine ausreichend große Kraft mehr durch die Rolle ausgeübt werden kann. Dementsprechend verringert sich die Standzeit der Rolle.

Der Erfindung liegt die Aufgabe zugrunde, eine Rolle der eingangs genannten Art zu schaffen, die längere Standzeiten als die bisher verfügbaren Rollen aufweist.

Erfindungsgemäß wird diese Aufgabe durch den Gegenstand der unabhängigen Ansprüche gelöst wobei der Stahl des Außenbereichs eine Legierung ist, die folgende Bestandteile mit folgenden Anteilen in Gew.-% umfasst:
C = 1 - 4,2;
Si = 0,2 - 2,5;
Mn = 0,2 - 5,0;
Cr = 3 - 31;
Mo = 0,2 - 11,5;
Ni = 0- 10;
V = 0,01 - 15;
Ta/Nb = 0,01 - 5;
W = 0,01 - 15
Co = 0,01 - 15
N = 0,01 - 0,25;
P = 0,001 -0,1;
S = 0,001 - 0,1
Pb = 0,001 - 1;
Cu = 0-0,5;
Rest Fe und herstellungsbedingte Verunreinigungen, wobei der Fe-Gehalt mindestens 40 Gew.-% beträgt.

Durch die erfindungsgemäße Ausbildung der Rolle, die dazu vorgesehen ist, beim Mahlen oder Pressen eine Kraft auf ein zu mahlendes oder zu pressendes Gut auszuüben, wird die Möglichkeit geschaffen, die mechanischen Eigenschaften der Rolle an die verschiedenen Belastungen, die im Inneren und an der Außenseite der Rolle wirken, anzupassen.
So lässt sich einerseits der Kernbereich mit einer großen Festigkeit versehen, damit er den Belastungen durch die großen Kräfte, die beim Mahlen bzw. Pressen auf die Rolle ausgeübt werden, standhalten kann. Andererseits kann vergleichsweise unabhängig von den Materialeigenschaften des Kernbereichs die Härte der Oberfläche des Außenbereichs derart vorgesehen werden, dass der Verschleiß gering bleibt. Außerdem lässt sich der Außenbereich in einer Dicke ausbilden, die wesentlich größer ist als die Schichtdicken, die sich mit den obengenannten Oberflächenbehandlungsverfahren, die aus dem Stand der Technik für die Behandlung der Rollen bekannt sind, erreichen lassen.
Bei geeigneter Ausbildung der erfindungsgemäßen Rolle können sich im Vergleich mit den bekannten Rollen erheblich größere Standzeiten erreicht werden. So ließen sich bereits Rollen herstellen, deren Standzeiten um mehr als das sechsfache länger sind als die der herkömmlichen Rollen.

Zweckmäßigerweise wird der Außenbereich in radialer Richtung in einer Dicke gebildet, die mindestens 3 %, vorzugsweise mindestens 30 %, des Radius der gesamten Rolle beträgt.
In einer bevorzugten Ausführungsform der Erfindung wird der Außenbereich in radialer Richtung in einer Dicke von mindestens 2 mm, vorzugsweise mindestens 5 mm, gebildet.

In einer Ausgestaltung der Erfindung wird der Kernbereich in radialer Richtung in einer Dicke gebildet, die mindestens 3 %, vorzugsweise mindestens 25 %, des Radius der Rolle beträgt.
Zweckmäßigerweise weist die Rolle einen Gesamtdurchmesser von 50 mm bis 1200 mm, vorzugsweise mindestens 100 bis 700 mm, auf. Ist der Kernbereich durch einen Hohlkörper, insbesondere einen Hohlzylinder, gebildet, weist er zweckmäßigerweise in radialer Richtung eine Dicke von 5 bis 150 mm, vorzugsweise von 20 bis 100 mm, auf.

In einer Ausführungsform der Erfindung beträgt die Kerbschlagzähigkeit des Materials des Kernbereichs zumindest 27J und vorzugsweise die Zähigkeit des Materials des Außenbereichs höchstens 25 J.

In einer Ausführungsform der Erfindung beträgt die Härte des Materials des Außenbereichs zumindest 50 HRC, insbesondere zumindest 58 HRC, und die Härte des Materials des Kernbereichs vorzugsweise höchstens 53 HRC.

Während es vorstellbar wäre, den Kernbereich aus Werkzeugstahl oder Vergütungsstahl zu bilden, wird er in der bevorzugten Ausführungsform der Erfindung aus einem Warmarbeitsstahl gebildet. Zur Herstellung des Außenbereichs wird zweckmäßigerweise eine Hartstofflegierung verwendet.

Um die Voraussetzungen an die benötigten mechanischen Eigenschaften zu erfüllen, ist der Stahl des Kernbereichs eine Legierung, die folgende Bestandteile mit folgenden Anteilen in Gew.-% umfasst:
C = 0,01 - 2,0;
Si = 0,1 - 1,6;
Mn = 0,2 - 18;
Cr = 0- 18;
Mo = 0,2 - 5,0;
Ni = 0 - 15;
V = 0,01 -5;
Ta/Nb = 0,01 - 5;
W = 0,01 - 15
Co = 0,01 -8
N = 0,01 -0,25;
P = 0,001 - 0,1;
S = 0,001 - 0,1
Pb = 0,001 - 1;
Cu = 0- 1,2
Rest Fe und herstellungsbedingte Verunreinigungen, wobei der Fe-Gehalt mindestens 40 Gew.-% beträgt.

Es hat sich gezeigt, dass sich ein besonders fester Verbund zwischen dem Kernbereich und dem Außenbereich schaffen lässt, wenn Diffusion zwischen den Materialien des Kernbereichs und des Außenbereichs erzeugt werden kann.

Während es vorstellbar wäre, den Kernbereich und den Außenbereich durch Diffusionsschweißen miteinander zu verbinden, werden sie in einer bevorzugten Ausführungsform der Erfindung durch heiß-isostatisches Pressen miteinander verbunden.

Die Materialien zur Herstellung des Kernbereichs und des Außenbereichs können zur Durchführung des Diffusionsschweißens bzw. des heiß-isostatischen Pressens als Pulver und/oder als bereits vorgeformte, insbesondere auch schmelzmetallurgisch hergestellte, Körper vorliegen.
Zum heiß-isostatischen Pressen werden die Materialien zweckmäßigerweise in eine Kapsel gegeben, die zum Übertragen des Gasdrucks beim heiß-isostatischen Pressen auf das Pulver dient. Die gefüllte Kapsel wird evakuiert und gasdicht verschlossen, in einem Autoklaven einer heiß-isostatischen Presse angeordnet und mittels eines Gases, beispielsweise Argongas, unter Druck gesetzt und erhitzt.

In einer ersten Variante wird der Kernbereich aus einem, vorzugsweise einteiligen, Kernkörper, der vorzugsweise eine zylindrische, insbesondere hohlzylindrische, Form aufweist und der Außenbereich aus einem Pulver gebildet. Das für die Herstellung des Außenbereichs benutzte Pulver wird, vorzugsweise durch Verdüsen, aus einer Stahlschmelze hergestellt. Die so erzeugten Pulverkörner weisen eine kugelige Form auf und/oder einen Durchmesser zwischen 0,01 und 1 mm auf.

Die Kapsel weist zweckmäßigerweise einen Innendurchmesser auf, der größer ist als der Außendurchmesser des Kernkörpers, sodass sich bei mittiger Anordnung des Kernkörpers in der Kapsel ein Hohlraum zwischen der Oberfläche des Kernkörpers und der Innenseite der Kapsel bildet, die mit dem Pulver zur Ausbildung des Außenbereichs aufgefüllt wird.

In einer zweiten Variante wird der Außenbereich aus einem, vorzugsweise einteiligen, Hohlzylinder und der Kernbereich aus einem Pulver, das sich vorzugsweise, wie oben für den Außenbereich beschrieben, durch Verdüsen aus einer Stahlschmelze bilden lässt, hergestellt. Zum heiß-isostatischen Pressen wird in diesem Fall eine Kapsel verwendet, die eine derartige Form aufweist, dass sich der den Außenbereich bildende Hohlzylinder etwa so in die Kapsel einsetzen lässt, dass seine äußere Mantelfläche an der Innenseite der äußeren Kapselwand anliegt. Die Kapsel weist ferner koaxial zu ihrer rohrförmigen Außenwand angeordnet eine rohrförmige Innenwand auf, sodass sich zwischen der Innenseite des den Außenbereich bildenden Hohlzylinders und der inneren Kapselwand ein Hohlraum zur Aufnahme des Pulvers, aus dem der Kernbereich hergestellt wird, bildet. Nach Befüllen mit dem Hohlzylinder und dem Pulver wird die Kapsel wie oben beschrieben evakuiert, gasdicht verschlossen und anschließend heiß-isostatisch gepresst, wobei das Pulver unter dem Argongasdruck, der durch die Kapsel auf es ausgeübt wird, einerseits selbst verdichtet und andererseits gegen die Innenseite des Hohlzylinders gepresst und mit diesem unter Diffusion zwischen dem Pulver und dem Hohlzylinder verbunden wird.

In einer dritten Variante werden sowohl den Kernbereich als auch den Außenbereich aus Pulver hergestellt. Die Kapsel muss dann zur Aufnahme der unterschiedlichen Pulvern Kammern aufweisen, die eine zur Bildung des Kern- und des Außenbereichs geeignete Form aufweisen. Zwischen der Kammer für den Kernbereich und derjenigen für den Außenbereich ist dann zweckmäßigerweise ein Trennkörper, vorzugsweise ein Blech, angeordnet, um zu vermeiden, dass sich die verschiedenen Pulver vor oder während der Wärmebehandlung miteinander vermischen, da eine solche Mischung die Zusammensetzung der Legierungen im Bereich der Grenzfläche für die gewünschte Diffusion hinaus verändern kann. Der Trennkörper, der vorzugsweise aus Stahl, insbesondere Edelstahl, oder einer Nickel-Chrom-Legierung gebildet ist, weist zweckmäßigerweise eine Dicke von 1 bis 5 mm auf. Die Diffusion findet dann zwar zwischen den Pulvern und dem Trennkörper statt. Dennoch ist auch in diesem Fall aufgrund der gewählten Legierungskombinationen sowie der Auswahl des Materials für das Blech die Ausbildung einer Grenzfläche, die eine Ausbildung von Rissen vermeidet, sichergestellt. In einer vierten Variante wird der Verbundkörper aus zwei monolithischen, vorzugsweise schmelzmetallurgisch hergestellten, Körpern gebildet. Zweckmäßigerweise ist der Kernbereich dann aus einem Vollzylinder oder einem Hohlzylinder und der Außenbereich aus einem Hohlzylinder gebildet, dessen Innendurchmesser so auf den Außendurchmesser des Voll- oder des Hohlzylinders des Kernbereichs gestimmt ist, dass er sich passend auf ihn aufsetzen lässt.

Es hat sich als besonders vorteilhaft erwiesen, mit einer Temperatur heiß-isostatisch zu pressen, die das 0,6 - 0,8-fache der Schmelztemperatur des Materials des Kernbereichs beträgt.
Zweckmäßigerweise wird das heiß-isostatische Pressen bei einer Temperatur von mindestens 900 °C bis 1200 °C und einem Druck von mindestens 800 bar, vorzugsweise bei einer Haltezeit von mindestens 60 min, durchgeführt.

In einer Ausgestaltung der Erfindung wird die Rolle nach ihrer Bildung mittels des heiß-isostatischen Pressens zur Änderung ihrer Form mittels eines trennenden Fertigungsverfahrens bearbeitet, vorzugsweise gefräst, gebohrt oder geschliffen. Die Oberfläche des Außenbereichs kann dadurch zur verbesserten Aufnahme von zu mahlendem bzw. zu pressendem Material mit einer Formung, vorzugsweise mit einer Riffelung, mit einer Lochung, oder mit Stegen, versehen werden.

In einer Ausführungsform der Erfindung wird die Rolle nach der mechanischen Bearbeitung einer Wärmebehandlung unterzogen. Es hat sich dafür als zweckmäßig erwiesen, die Rolle zum Härten bei 1000 bis 1200 °C, vorzugsweise bei 1050 bis 1150 °C, und/oder zum Anlassen bei 475 bis 650 °C, vorzugsweise bei 500 bis 625 °C, wärmezubehandeln.

Die Erfindung wird nachfolgend anhand von Ausführungsbeispielen und der beigefügten Zeichnungen, die sich auf die Ausführungsbeispiele beziehen, näher erläutert. Es zeigen:
- Fig. 1: eine mit einer erfindungsgemäßen Rolle versehene Pelletpresse,
- Fig. 2: eine erfindungsgemäße Rolle in perspektivischer Darstellung teilweise im Schnitt,
- Fig. 3: eine weitere erfindungsgemäße Rolle in perspektivischer Darstellung teilweise im Schnitt,
- Fig. 4: eine Kapsel in der ein monolithischer Grundkörper und Pulver zur Bildung einer erfindungsgemäßen Rolle durch heiß-isostatisches Pressen,
- Fig. 5: die Kapsel nach Fig. 4 nach dem heiß-isostatischen Pressen,
- Fig. 6 und 7: Tabellen, die Zusammensetzung von zur Herstellung einer nicht erfindungsgemäßen Rolle verwendbaren Materialien zeigt, und
- Fig. 8: ein Schliffbild eines Abschnitts der erfindungsgemäßen Rolle.

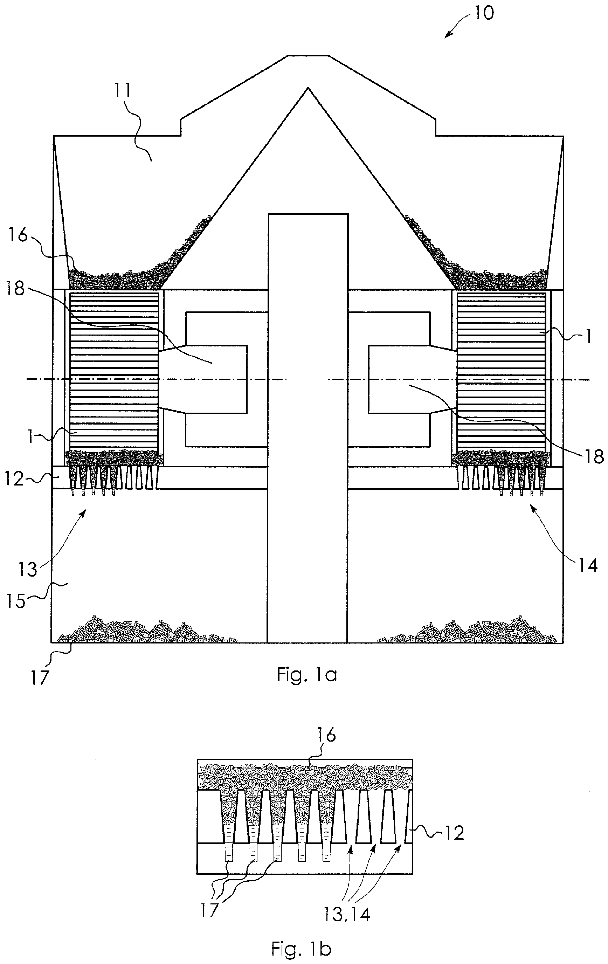

In Fig. 1 ist teilweise im Schnitt eine Pelletpresse 10 gezeigt, mittels derer sich aus Holzspänen gepresste Pellets herstellen lassen, die sich zur Energie- und Wärmeerzeugung nutzen lassen. Die Pelletpresse 10 eignet sich auch zur Herstellung von Pellets, die Futtermittel, Trockengrün, Trockenschnitzel oder anderen nachwachsende Rohstoffen enthalten. Ferner können mit der Pelletpresse Pellets für die Düngemittelindustrie hergestellt werden, die z.B. aus Tierkot, insbesondere Hühnerkot oder/und aus Gährresten, geformt werden.
Die Pelletpresse 10 umfasst eine Füllkammer 11, in die nach und nach in Form von Pellets 17 zu pressendes Gut 16, z.B. die Holzspäne, das Futtermittel oder der Tierkot, eingefüllt wird, und eine flache Pressmatrize 12, die an mehreren Stellen, von denen hier lediglich zwei gezeigt sind, mit Gruppen 13,14 von Ausnehmungen versehen ist. Über jeder der Ausnehmungsgruppen 13,14 ist eine erfindungsgemäße Rolle 1 angeordnet, die beim Pressen der Pellets kontinuierlich gedreht wird und dadurch das Gut 16 aus der Pelletkammer 11 durch die Ausnehmungen 13,14 in eine Auffangkammer 15 presst. Die Ausnehmungen 13,14 weisen eine an die gewünschte Pelletform angepasste, senkrecht zur Pressrichtung ausgebildete Querschnittsform auf. Wie Fig. 1b zeigt, verringert sich der Durchmesser der Ausnehmungen 13,14 in Pressrichtung kontinuierlich, damit die Pellets 17 ausreichend dicht werden und das Gut 16 nach der Pressung einer gewissen Menge und Erreichen einer gewissen Dichte in die einzelnen Pellets 17zerfällt.

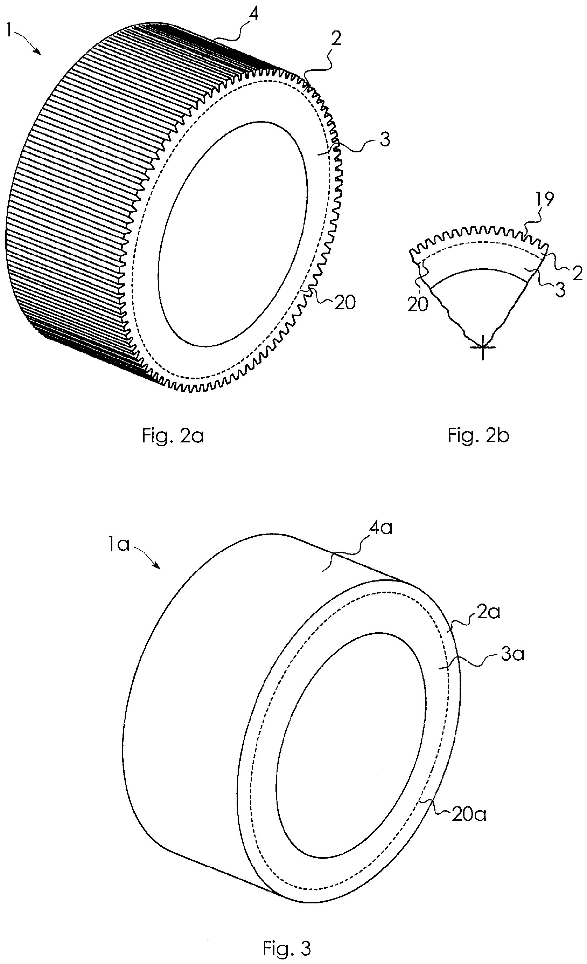

Wie Fig. 2 zu entnehmen ist, ist die Rolle 1 durch einen Verbundkörper gebildet, der einen Außenbereich 2, der die Mantelfläche 4 der Rolle 1 umfasst, und einen in der Rolle 1 in radialer Richtung innerhalb des Außenbereichs 2 liegenden Kernbereich 3 aufweist. Der Außenbereich 2 und der Kernbereich 3 sind aus unterschiedlichen metallischen Materialien gebildet, um die Bereiche mit den jeweilig benötigten mechanischen Eigenschaften versehen zu können, und sind an einer Grenzfläche 20 miteinander verbunden.
Der Außenbereich 2 weist eine im Vergleich zu den bekannten Rollen größere Härte, größere Verschleißbeständigkeit und größere Korrosionsbeständigkeit auf. Durch die große Härte und die große Verschleißbeständigkeit ist der Außenbereich 2 an die großen mechanischen Belastungen, die wirken, wenn das Gut 16 beim Pressen mittels der Rolle 1 hin zu den Ausnehmungen geschoben und durch sie hindurchgepresst wird, angepasst. Die große Korrosionsbeständigkeit ist vorteilhaft, weil das zu pressende Gut 16, beispielsweise die Holzspäne oder der Tierkot, eine gewisse Feuchtigkeit aufweist, die an der Rolle 1, insbesondere im Außenbereich 2, der beim Pressen in direktem Kontakt mit dem Gut 16 ist, Korrosion verursacht. In die Mantelfläche 4 der Rolle 1 sind Rillen eingefräst worden, damit die Rolle das zu pressende Gut 16 besser bewegen kann. Es wäre aber auch vorstellbar, die Mantelfläche 4 mit einer anderen geeigneten Formung zu versehen.
Der Kernbereich 3 weist eine große Festigkeit auf, damit er die von einer Welle 18 eines hier nicht näher gezeigten Antriebs der Pelletpresse 10 auf die Rolle 1 zu übertragenden Kräfte aufnehmen kann.
Fig. 3 zeigt eine weitere erfindungsgemäße Rolle 1a, die sich von derjenigen nach Fig. 2 dadurch unterscheidet, dass eine Mantelfäche 4a eines Außenbereichs 2a nicht mit Rillen 19 versehen, sondern im Querschnitt kreisrund ist. Die Mantelfläche 4a weist zweckmäßigerweise eine derart große Rauigkeit auf, dass sie das Gut 16 hin zu den Ausnehmungen 13,14 bewegen und durch sie hindurch pressen kann.

Neben der hier schematisch dargestellten Pelletpresse 10, die eine ebene Pressmatrize 12 aufweist, kann die erfindungsgemäße Rolle 1 auch in anderen Pelletpressen verwendet werden, beispielsweise in Pelletpressen, die eine ringförmige Pressmatrize aufweisen.
Es versteht sich, dass sich die erfindungsgemäße Rolle 1 aufgrund ihrer mechanischen Eigenschaften vorteilhaft auch zur Verwendung in anderen Mühlen oder Pressen eignet, die als Pressmittel eine Rolle aufweisen.

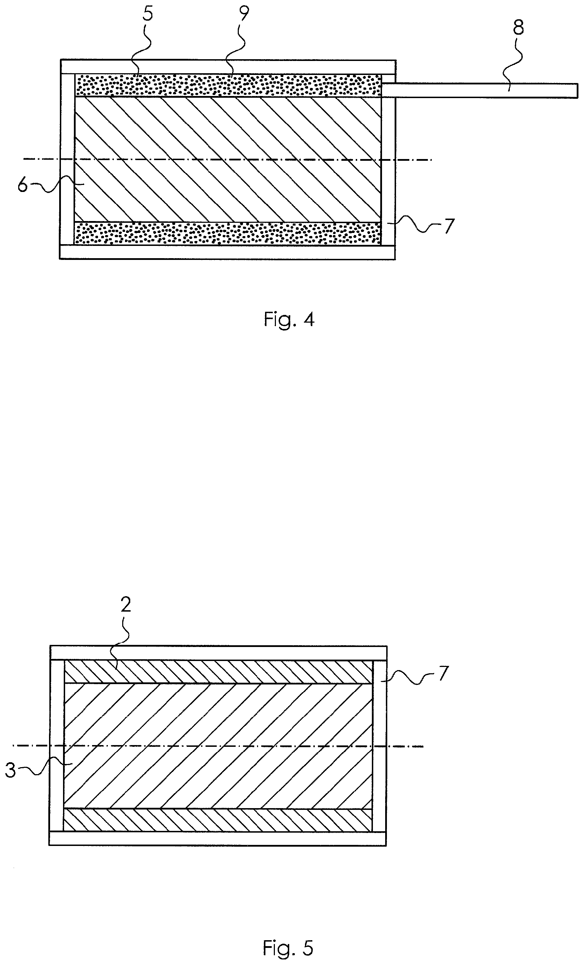

Die Rollen 1,1a lassen sich herstellen wie nachfolgend erläutert.
Der Kernbereich 3,3a wird aus einem einteiligen Hohlzylinder gebildet, der schmelzmetallurgisch aus einem Stahl hergestellt worden ist und auf seiner Innenseite mit Formungen versehen sein kann, die eine mechanische Verbindung mit dem genannten Antrieb der Pelletpresse 10 erlaubt.
Wie Fig. 5 zeigt, wird der Hohlzylinder 3,3a zur Vorbereitung einer Verarbeitung mittels heiß-isostatischem Pressen koaxial mittig in einer hohlzylindrischen Kapsel 7, die im vorliegenden Beispiel aus einem geringfügig legierten Baustahl gebildet ist, aber auch aus einem anderen Stahl sowie Glas oder Kunststoff gebildet sein könnte, angeordnet und dort gehalten. Der Innendurchmesser der Kapsel 7 ist größer als der Außendurchmesser des Hohlzylinders, sodass ein Hohlraum 9 zwischen dem Kernbereich 3,3a und der Kapsel 7 verbleibt. Durch ein Einfüllrohr 8 wird der Hohlraum 9 mit einem Pulver 5, das durch Verdüsen aus einer Stahlschmelze hergestellt worden sein kann, gefüllt. Anschließend wird die Kapsel 7 gerüttelt, evakuiert und gasdicht verschlossen.

Beim anschließenden heiß-isostatischen Pressen wird die Kapsel 7 gemeinsam mit dem Pulver 5 und dem Hohlzylinder verdichtet. Dabei bildet sich aus dem Pulver 5, das sich vollständig verdichtet, der Außenbereich 2 der Rolle 1,1a verbindet sich mit dem den Hohlzylinder, der nun den Kernbereich 3,3a der Rolle 1,1a bildet.

Die derart hergestellte Rolle kann anschließend mechanisch bearbeitet werden, um ihr die gewünschte Endform zu verleihen. Dazu kann die Mantelfläche mit trennenden Fertigungsverfahren bearbeitet werden, beispielsweise zur Ausbildung der in Fig. 2a und 2b gezeigten Rillen 19 gefräst werden oder zur Ausbildung von Sacklöchern gebohrt werden.

Ferner kann die Rolle 1,1a nach dem heiß-isostatischen Pressen, ggf. nach der mechanischen Bearbeitung, wärmebehandelt werden. Optional kann die Rolle 1,1a danach nochmals mechanisch bearbeitet, insbesondere geschliffen werden.

### Beispiel 1: [nicht erfindungsgemäß im Sinne der Ansprüche]

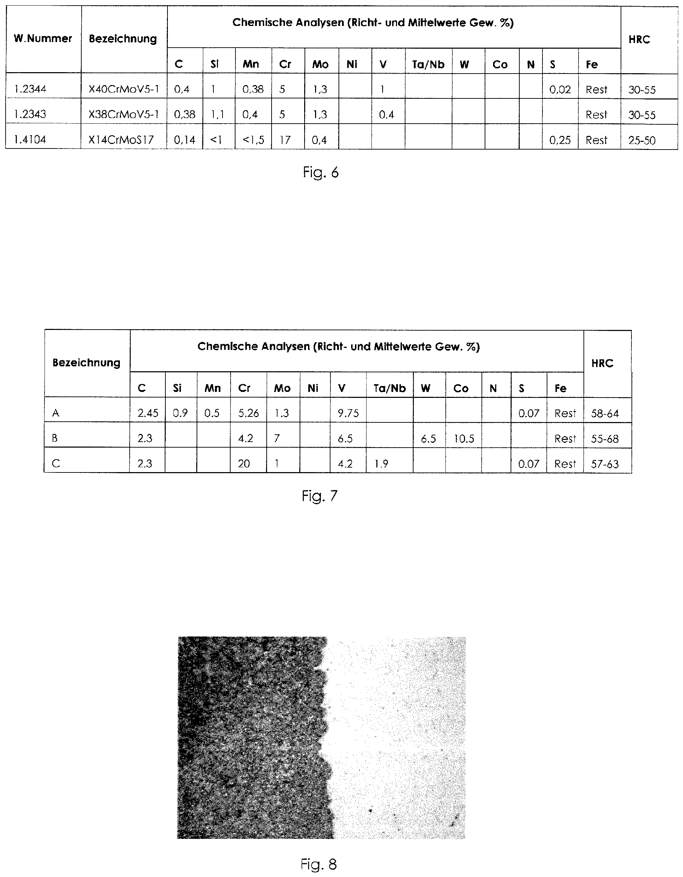

In die Kapsel 7 wurde wie oben beschrieben ein schmelztechnisch hergestellter Hohlzylinder aus einem ein Warmarbeitsstahl der Werkstoffnummer 1.2344 (X40CrMoV5-1) eingesetzt (vgl. Zusammensetzung in Tabelle in Fig. 6) und die Kapsel 7 mit einem Pulver A, dessen Zusammensetzung der Tabelle aus Fig. 7 zu entnehmen ist, gefüllt. Danach wurde die Kapsel 7 evakuiert und bei 1100 °C während 3 Stunden in einem Autoclaven einer heiß-isostatischen Presse bei einem Argongasdruck von 1000 bar verdichtet. Die Abkühlung erfolgte gesteuert in der heiß-isostatischen Presse mit 11 °C/h.
Dank der gesteuerten Abkühlung konnte die nun in der Kapsel 7 gebildete Rolle im weichgeglühten Zustand aus dem Ofen genommen werden und eine erste Prüfung eines Grenzbereichs 20 zwischen dem Kernbereich 2 und dem Außenbereich 3 vorgenommen werden. Dazu wurde eine Stirnseite abgesägt und zur Prüfung des Gefüges und des Verbundes eine Probe entnommen, geschliffen und im Mikroskop abgebildet. Fig. 8 zeigt ein derart erzeugtes Schliffbild des Grenzbereiches, dem zu entnehmen ist, dass der Außenbereich 2 vollständig verdichtet ist und sich eine dichte, homogene Grenzfläche zwischen dem Kernbereich 2 und dem Außenbereich 3 gebildet hat.

Nach der Bearbeitung und Entfernen der Kapsel 7 wurde die Rolle 1 durch Fräsen mit einer Formung versehen und anschließend einer Wärmebehandlung unterzogen und dabei bei 1100 °C gehärtet und anschließend bei 600 °C angelassen.
Die Rolle 1 wurde mit Erfolg im Bereich von auftretendem Verschleiß bei sehr hoher Druckbelastung ohne Korrosionsangriff an der Rolle 1 benutzt. Sie weist im Vergleich zu den herkömmlichen Rollen in der Pelletpresse 10 eine mindestens 4 mal längere Standzeit auf.

### Beispiel 2: [nicht erfindungsgemäß im Sinne der Ansprüche]

Bei gleichen Herstellungsparametern beim heiß-isostatischen Pressen und der sich daran anschließenden mechanischen Bearbeitung und Wärmebehandlung wie nach Beispiel 1 wurde ein Hohlzylinder aus einem Warmarbeitsstahl der Werkstoffnummer 1.2343 (X38CrMoV5-1) schmelzmetallurgisch hergestellt und mittels eines Pulvers, das durch Verdüsen aus einer Schmelze hergestellt worden ist, die Zusammensetzung B aus der Tabelle aus Fig. 7 aufweist und einen Stahl mit großer Verschleißfestigkeit und Zähigkeit bildet, eine Rolle hergestellt, deren Kernbereich aus dem Hohlzylinder und dessen Außenbereich aus dem Pulver gebildet worden ist.
Auch die auf diese Weise hergestellte Rolle wurde mit Erfolg im Bereich von auftretendem Verschleiß bei sehr hoher Druckbelastung ohne Korrosionsangriff an der Rolle benutzt. Sie hat im Vergleich zu den herkömmlichen Rollen in der Pelletpresse 10 eine mindestens 5 mal längere Standzeit.

### Beispiel 3: [nicht erfindungsgemäß im Sinne der Ansprüche]

Bei gleichen Herstellungsparametern beim heiß-isostatischen Pressen wie nach Beispiel 1 wurde ein Hohlzylinder aus einem Warmarbeitsstahl der Qualität 1.4104 (X14CrMoS17) schmelzmetallurgisch hergestellt und mittels eines Pulvers, das durch Verdüsen aus einer Schmelze hergestellt worden ist, die Zusammensetzung C aus der Tabelle aus Fig. 7 aufweist und einen Stahl mit großer Verschleißfestigkeit und Korrosionsbeständigkeit bildet, eine Rolle hergestellt, deren Kernbereich aus dem Hohlzylinder und dessen Außenbereich aus dem Pulver gebildet worden ist.
Nach Entfernen der Kapsel 7 wurde die Rolle 1 geschliffen und anschließend einer Wärmebehandlung unterzogen und dabei bei 1080 °C gehärtet und anschließend bei 525 °C angelassen.
Die Rolle 1 wurde mit Erfolg im Bereich von auftretendem Verschleiß bei sehr hoher Druckbelastung ohne Korrosionsangriff an der Rolle 1 benutzt. Sie hat eine im Vergleich zu den herkömmlichen Rollen in der Pelletpresse 10 eine mindestens 3 mal längere Standzeit.

## Patentansprüche

1. Verfahren zur Herstellung einer Rolle (1) für eine Mahl- oder/und Pressvorrichtung, insbesondere einer Kollerrolle für eine Presse zur Herstellung von Pellets, die aus metallischem Material gebildet wird, wobei die Rolle (1) aus einem Verbundkörper gebildet wird, dessen Außenbereich (2), der eine Mantelfläche (4) der Rolle (1) umfasst und aus Stahl gebildet wird, und dessen innerhalb des Außenbereichs (2) angeordneter, aus Stahl gebildeter Kernbereich (3), aus verschiedenen, sich in ihrer Zähigkeit und/oder Härte unterscheidenden Stählen hergestellt und miteinander verbunden werden, wobei der Kernbereich (3) aus einem Stahl hergestellt wird, der eine größere Zähigkeit aufweist als der Stahl des Außenbereichs (2), oder/und der Außenbereich (2) aus einem Stahl hergestellt wird, der eine größere Härte aufweist als der Stahl des Kernbereichs (3),
**dadurch gekennzeichnet,**
**dass** der Stahl des Außenbereichs (2) eine Legierung ist, die folgende Bestandteile mit folgenden Anteilen in Gew.-% umfasst:
C = 1 - 4,2;
Si = 0,2 - 2,5;
Mn = 0,2 - 5,0;
Cr = 3-31;
Mo = 0,2 - 11,5;
Ni = 0 - 10;
V = 0,01 - 15;
Ta/Nb = 0,01 - 5;
W = 0,01 - 15
Co = 0,01 - 15
N = 0,01 - 0,25;
P = 0,001 - 0,1;
S = 0,001 -0,1
Pb = 0,001 - 1;
Cu = 0 - 0,5;
Rest Fe und herstellungsbedingte Verunreinigungen, wobei der Fe-Gehalt mindestens 40 Gew.-% beträgt.

2. Verfahren nach Anspruch 1,
**dadurch gekennzeichnet,**
**dass** der Außenbereich (2) mittels heiß-isostatischen Pressens mit dem Kernbereich (3) verbunden wird.

3. Verfahren nach Anspruch 1 oder 2,
**dadurch gekennzeichnet,**
**dass** der Kernbereich (3) aus einem, vorzugsweise einteiligen, Kernkörper hergestellt wird, der vorzugsweise eine zylindrische, insbesondere hohlzylindrische Form aufweist.

4. Verfahren nach einem der Ansprüche 1 bis 3,
**dadurch gekennzeichnet**,
der Außenbereich (2) aus einem Pulver (5) hergestellt wird.

5. Verfahren nach einem der Ansprüche 1 bis 4,
**dadurch gekennzeichnet,**
**dass** der Stahl des Kernbereichs (3) eine Legierung ist, die folgende Bestandteile mit folgenden Anteilen in Gew.-% umfasst:
C = 0,01 - 2,0;
Si = 0,1 - 1,6;
Mn = 0,2 - 18;
Cr = 0 - 18;
Mo = 0,2 - 5,0;
Ni = 0 - 15;
V = 0,01 - 5;
Ta/Nb = 0,01 - 5;
W = 0,01 - 15
Co = 0,01 -8
N = 0,01 - 0,25;
P = 0,001 -0,1;
S = 0,001 -0,1
Pb = 0,001 - 1;
Cu = 0- 1,2
Rest Fe und herstellungsbedingte Verunreinigungen, wobei der Fe-Gehalt mindestens 40 Gew.-% beträgt.

6. Verfahren nach einem der Ansprüche 1 bis 5,
**dadurch gekennzeichnet,**
**dass** die Rolle (1) nach der mechanischen Bearbeitung einer Wärmebehandlung unterzogen wird.

7. Rolle für eine Mahl- oder/und Pressvorrichtung, insbesondere Kollerrolle für eine Presse zur Herstellung von Pellets, die aus metallischem Material gebildet ist und die aus einem Verbundkörper gebildet ist, dessen Außenbereich (2), der eine Mantelfläche der Rolle (1) umfasst und aus Stahl gebildet ist, und dessen innerhalb des Außenbereichs (2) angeordneter, aus Stahl gebildeter Kernbereich (3) der Rolle (1), aus verschiedenen, sich in ihrer Zähigkeit und/oder Härte unterscheidenden Stählen gebildet und miteinander verbunden sind, wobei der Stahl des Kernbereichs (3) eine größere Zähigkeit aufweist als der Stahl des Außenbereichs (2) und/oder der Stahl des Außenbereichs (2) eine größere Härte aufweist als der Stahl des Kernbereichs (3),
**dadurch gekennzeichnet,**
**dass** der Stahl des Außenbereichs (2) eine Legierung ist, die folgende Bestandteile mit folgenden Anteilen in Gew.-% umfasst:
C = 1 - 4,2;
Si = 0,2 - 2,5;
Mn = 0,2 - 5,0;
Cr=3-31;
Mo = 0,2 - 11,5;
Ni = 0 - 10;
V = 0,01 - 15;
Ta/Nb = 0,01 - 5;
W = 0,01 - 15
Co = 0,01 - 15
N = 0,01 - 0,25;
P = 0,001 - 0,1;
S = 0,001 - 0,1
Pb = 0,001 - 1;
Cu = 0 - 0,5;
Rest Fe und herstellungsbedingte Verunreinigungen, wobei der Fe-Gehalt mindestens 40 Gew.-% beträgt.

8. Rolle nach Anspruch 7,
**dadurch gekennzeichnet,**
**dass** die Härte des Materials des Außenbereichs (2) zumindest 50 HRC, vorzugsweise zumindest 58 HRC, beträgt und vorzugsweise die Härte des Materials des Kernbereichs (2) höchstens 53 HRC beträgt.

## Claims

1. Method for producing a roller (1) for a grinding or/and pressing device, in particular a pan roller for a press for producing pellets, which is formed from metallic material, wherein the roller (1) is formed from a composite body, the outer region (2) of which, which comprises a lateral surface (4) of the roller (1) and is formed from steel, and the core region (3) of which, which is arranged within the outer region (2) and is formed from steel, are produced from a variety of steels which differ in terms of their toughness and/or hardness and are connected to one another, wherein the core region (3) is produced from a steel which has a greater toughness than the steel of the outer region (2), or/and the outer region (2) is produced from a steel which has a greater hardness than the steel of the core region (3),
**characterized in that**
the steel of the outer region (2) is an alloy comprising the following constituents with the following proportions in % by weight:
C = 1 - 4.2;
Si = 0.2 - 2.5;
Mn = 0.2 - 5.0;
Cr = 3 - 31;
Mo = 0.2 - 11.5;
Ni = 0 - 10;
V = 0.01 - 15;
Ta/Nb = 0.01 - 5;
W = 0.01 - 15;
Co = 0.01 - 15;
N = 0.01 - 0.25;
P = 0.001 - 0.1;
S = 0.001 - 0.1;
Pb = 0.001 - 1;
Cu = 0 - 0.5;
balance Fe and production-related impurities, wherein the Fe content is at least 40% by weight.

2. Method according to Claim 1,
**characterized in that**
the outer region (2) is connected to the core region (3) by means of hot isostatic pressing.

3. Method according to Claim 1 or 2,
**characterized in that**
the core region (3) is produced from a preferably single-part core body which preferably has a cylindrical, in particular hollow-cylindrical form.

4. Method according to one of Claims 1 to 3, **characterized in that**
the outer region (2) is produced from a powder (5).

5. Method according to one of Claims 1 to 4,
**characterized in that**
the steel of the core region (3) is an alloy comprising the following constituents with the following proportions in % by weight:
C = 0.01 - 2.0;
Si = 0.1 - 1.6;
Mn = 0.2 - 18;
Cr = 0 - 18;
Mo = 0.2 - 5.0;
Ni = 0 - 15;
V = 0.01 - 5;
Ta/Nb = 0.01 - 5;
W = 0.01 - 15;
Co = 0.01 - 8;
N = 0.01 - 0.25;
P = 0.001 - 0.1;
S = 0.001 - 0.1;
Pb = 0.001 - 1;
Cu = 0 - 1.2;
balance Fe and production-related impurities, wherein the Fe content is at least 40% by weight.

6. Method according to one of Claims 1 to 5,
**characterized in that**
the roller (1) is subjected to a heat treatment after the machining.

7. Roller for a grinding or/and pressing device, in particular pan roller for a press for producing pellets, which is formed from metallic material and is formed from a composite body, the outer region (2) of which, which comprises a lateral surface of the roller (1) and is formed from steel, and the core region (3) of the roller (1), which is arranged within the outer region (2) and is formed from steel, are formed from a variety of steels which differ in terms of their toughness and/or hardness and are connected to one another, wherein the steel of the core region (3) has a greater toughness than the steel of the outer region (2), and/or the steel of the outer region (2) has a greater hardness than the steel of the core region (3),
**characterized in that**
the steel of the outer region (2) is an alloy comprising the following constituents with the following proportions in % by weight:
C = 1 - 4.2;
Si = 0.2 - 2.5;
Mn = 0.2 - 5.0;
Cr = 3 - 31;
Mo = 0.2 - 11.5;
Ni = 0 - 10;
V = 0.01 - 15;
Ta/Nb = 0.01 - 5;
W = 0.01 - 15;
Co = 0.01 - 15;
N = 0.01 - 0.25;
P = 0.001 - 0.1;
S = 0.001 - 0.1;
Pb = 0.001 - 1;
Cu = 0 - 0.5;
balance Fe and production-related impurities, wherein the Fe content is at least 40% by weight.

8. Roller according to Claim 7,
**characterized in that**
the hardness of the material of the outer region (2) is at least 50 HRC, preferably at least 58 HRC, and the hardness of the material of the core region (2) is preferably at most 53 HRC.

## Revendications

1. Procédé pour la fabrication d'un rouleau (1) pour un dispositif de broyage et/ou de presse, en particulier d'un galet pour une presse pour la fabrication de pellets, qui est formé à partir d'un matériau métallique, le rouleau (1) étant formé à partir d'un corps composite dont la zone externe (2), qui comprend une surface d'enveloppe (4) du rouleau (1) et qui est formée à partir d'acier, et la zone de noyau (3), disposée à l'intérieur de la zone externe (2) et formée à partir d'acier, sont réalisées en aciers différents, se distinguant par leur ductilité et/ou leur dureté, et reliées l'une à l'autre, la zone de noyau (3) étant réalisée à partir d'un acier qui présente une ductilité plus grande que celle de l'acier de la zone externe (2) et/ou la zone externe (2) étant réalisée à partir d'un acier qui présente une dureté plus grande que celle de l'acier de la zone de noyau (3), **caractérisé en ce que** l'acier de la zone externe (2) est un alliage qui comprend les constituants suivants, aux proportions suivantes en % en poids :
C = 1-4,2 ;
Si = 0,2-2,5 ;
Mn = 0,2-5,0;
Cr = 3-31 ;
Mo = 0,2-11,5;
Ni = 0-10;
V = 0,01-15;
Ta/Nb = 0,01-5 ;
W = 0,01-15 ;
Co = 0,01-15;
N = 0,01-0,25 ;
P = 0,001-0,1;
S = 0,001-0,1
Pb = 0,001-1 ;
Cu = 0-0,5 ;
le reste étant du Fe et les impuretés dues à la fabrication, la teneur en Fe étant d'au moins 40% en poids.

2. Procédé selon la revendication 1, **caractérisé en ce que** la zone externe (2) est reliée à la zone de noyau (3) à l'aide d'une presse isostatique à chaud.

3. Procédé selon la revendication 1 ou 2, **caractérisé en ce que** la zone de noyau (3) est réalisée à partir d'un corps de noyau de préférence d'une seule pièce, qui présente de préférence une forme cylindrique, en particulier cylindrique creuse.

4. Procédé selon l'une quelconque des revendications 1 à 3, **caractérisé en ce que** la zone externe (2) est réalisée à partir d'une poudre (5).

5. Procédé selon l'une quelconque des revendications 1 à 4, **caractérisé en ce que** l'acier de la zone de noyau (3) est un alliage qui comprend les constituants suivants, aux proportions suivantes en % en poids :
C = 0,01-2,0 ;
Si = 0,1-1,6;
Mn = 0,2-18;
Cr = 0-18;
Mo = 0,2-5,0 ;
Ni = 0-15;
V = 0,01-5 ;
Ta/Nb = 0,01-5;
W = 0,01-15;
Co = 0,01-8;
N = 0,01-0,25 ;
P = 0,001-0,1 ;
S = 0,001-0,1
Pb = 0,001-1 ;
Cu = 0-1,2
le reste étant du Fe et les impuretés dues à la fabrication, la teneur en Fe étant d'au moins 40% en poids.

6. Procédé selon l'une quelconque des revendications 1 à 5, **caractérisé en ce que** le rouleau (1) est soumis à un traitement thermique après l'usinage mécanique.

7. Rouleau pour un dispositif de broyage et/ou de presse, en particulier galet pour une presse pour la fabrication de pellets, qui est formé à partir d'un matériau métallique et qui est formé à partir d'un corps composite dont la zone externe (2), qui comprend une surface d'enveloppe du rouleau (1) et qui est formée à partir d'acier, et la zone de noyau (3) du rouleau (1), disposée à l'intérieur de la zone externe (2) et formée à partir d'acier, sont formées à partir d'aciers différents, se distinguant par leur ductilité et/ou leur dureté, et reliées l'une à l'autre, l'acier de la zone de noyau (3) présentant une ductilité plus grande que celle de l'acier de la zone externe (2) et/ou l'acier de la zone externe (2) présentant une dureté plus grande que celle de l'acier de la zone de noyau (3), **caractérisé en ce que** l'acier de la zone externe (2) est un alliage qui comprend les constituants suivants, aux proportions suivantes en % en poids :
C= 1-4,2;
Si = 0,2-2,5 ;
Mn = 0,2-5,0;
Cr = 3-31 ;
Mo = 0,2-11,5 ;
Ni = 0-10;
V = 0,01-15;
Ta/Nb = 0,01-5 ;
W = 0,01-15;
Co = 0,01-15;
N = 0,01-0,25;
P = 0,001-0,1 ;
S = 0,001-0,1
Pb = 0,001-1 ;
Cu = 0-0,5 ;
le reste étant du Fe et les impuretés dues à la fabrication, la teneur en Fe étant d'au moins 40% en poids.

8. Rouleau selon la revendication 7, **caractérisé en ce que** la dureté du matériau de la zone externe (2) est d'au moins 50 HRC, de préférence d'au moins 58 HRC et, de préférence, la dureté du matériau de la zone de noyau (3) est d'au moins 53 HRC.
